# EUROPÄISCHE PATENTSCHRIFT

(11) **EP 3 245 655 B1**
(45) Veröffentlichungstag und Bekanntmachung des Hinweises auf die Patenterteilung: **09.09.2020**
(21) Anmeldenummer: 16701571.8
(22) Anmeldetag: 08.01.2016
(51) Int. Cl.: G21F 9/02, G21C 19/00, G21D 1/02, G21D 3/06

(54) **BELÜFTUNGSSYSTEM EINES BETRIEBSRAUMES UND ZUGEHÖRIGES BETRIEBSVERFAHREN ZUM EINSATZ WÄHREND EINES SCHWEREN STÖRFALLS IN EINER KERNTECHNISCHEN ANLAGE**
VENTILATION SYSTEM OF AN OPERATIONS ROOM AND METHOD FOR USE DURING A SEVERE ACCIDENT IN A NUCLEAR PLANT
SYSTEME DE VENTILATION D'UN LOCAL PROFESSIONEL ET PROCEDE POUR L'USAGE PENDANT UN ACCIDENT GRAVE DANS UNE INSTALLATION NUCLEAIRE

(30) Priorität: 16.01.2015 DE 102015200679
(43) Veröffentlichungstag der Anmeldung: 22.11.2017
(73) Patentinhaber: Framatome GmbH, 91052 Erlangen (DE)
(72) Erfinder: HILL, Axel, 64589 Stockstadt (DE)
(74) Vertreter: Lavoix
(86) Internationale Anmeldenummer: PCT/EP2016/050255
(87) Internationale Veröffentlichungsnummer: WO 2016/113189

(56) Entgegenhaltungen:
- EP-A1- 0 307 581
- WO-A1-2006/097217
- DE-A1- 3 418 972
- US-A- 3 944 646
- US-A- 4 369 048

## Beschreibung

In einem Kernkraftwerk muss bei Stör- oder Unfallsituationen abhängig vom jeweiligen Störfall und von gegebenenfalls eingeleiteten Gegenmaßnahmen mit einer möglicherweise signifikanten Freisetzung von radioaktiven Spaltprodukten, insbesondere Jod, Aerosole und Edelgasen gerechnet werden. Durch Leckagen des Containments muss hierbei, bevor es zu einer Freisetzung in die Kraftwerksumgebung kommt, auch mit einer Freisetzung und Verteilung von Aktivität in den Kraftwerksgebäuden (z. B. Hilfsanlagengebäude, Schaltanlage, Warte, etc.) ausgegangen werden. Hierbei stellt insbesondere, neben der Freisetzung von aerosolgebundener Aktivität, die Freisetzung von Edelgasen ein Problem für das Kraftwerkspersonal dar.

Zu einer massiven Edelgasfreisetzung kommt es unter Umständen auch bei der Einleitung einer gefilterten Druckentlastung und der Ausbildung einer Edelgaswolke über dem Kraftwerksgelände. Je nach Wetterlage kann eine längerfristige Belastung nicht vollkommen ausgeschlossen werden.

Für die Einleitung von sogenannten Accident-Management Maßnahmen ist es zwingend erforderlich, dass die Bedingungen in der auch als Leitstand oder Leitwarte bezeichneten Warte einen Aufenthalt des Betriebspersonals ermöglichen, ohne dass es zu einer unzulässigen Strahlenbelastung und Kontamination des Personals kommt.

Bei auslegungsüberschreitenden Störfällen mit "Station Black-Out" (SBO) stehen die bestimmungsgemäßen bzw. normalbetrieblichen Lüftungs- und Filteranlagen nicht mehr zur Verfügung, um die wesentlichen lüftungstechnischen Parameter zur Aufrechterhaltung der Begehbarkeit der Warte zu gewährleisten.

Bisherige Konzepte sehen zur Beherrschung derartiger Szenarien eine Isolation der Warte vor. Die Versorgung erfolgt beispielsweise mit mobilen Belüftungsanlagen, die mit verschiedenen Filtern ausgestattet sind. Eine zufriedenstellende Edelgasrückhaltung ist mit diesen Anlagen nicht möglich.

Andere Konzepte versorgen die Warte mit gespeicherter Druckluft. Die Lagerhaltung in Druckbehältern für einen größeren Zeitraum ist jedoch sehr aufwändig und daher begrenzt. Ein modularer und mobiler Systemaufbau ist praktisch nicht möglich. Druckspeicherkonzepte erfordern überdies einen hohen Aufwand bei einer Nachrüstung in laufenden Anlagen.

Der Erfindung liegt die Aufgabe zugrunde, ein möglichst einfach und kompakt gehaltenes Belüftungssystem für einen Leitstand einer kerntechnischen Anlage oder einen ähnlichen von Betriebspersonal begehbaren Raum anzugeben, welches bei schweren Störfällen mit Freisetzung von radioaktiver Aktivität zumindest für eine Zeitspanne von einigen Stunden eine Zufuhr von dekontaminierter Frischluft ermöglicht, so dass es zu einer möglichst geringen Strahlenbelastung von im Leitstand anwesendem Betriebspersonal kommt. Insbesondere soll dabei der Anteil von radioaktiven Edelgasen in der dem Leitstand zugeführten Frischluft möglichst gering sein. Das Belüftungssystem soll ferner einen möglichst passiven Charakter besitzen und nur wenig elektrische Energie verbrauchen. Des Weiteren soll ein besonders vorteilhaftes Verfahren zum Betreiben eines derartigen Belüftungssystems angegeben werden.

In Bezug auf die Vorrichtung wird die Aufgabe erfindungsgemäß gelöst durch die Merkmale des Anspruchs 1. In Bezug auf das Verfahren wird die Aufgabe gelöst durch die Merkmale des Anspruchs 11.

Vorteilhafte Ausgestaltungen sind Gegenstand der Unteransprüche und gehen im Übrigen aus der nachfolgenden detaillierten Beschreibung hervor.

Das erfindungsgemäße Belüftungssystem weist unter anderem vorteilhafterweise ein Aerosol- und Jodfiltermodul auf. Die Ansaugluft in der Zuluftleitung wird hierbei über ein Gebläse angesaugt und über Schwebstofffilter zur Abscheidung der Aerosole geführt. Nach der Abscheidung der Schwebstoffe werden vorteilhafterweise radioaktive Jodverbindungen in einem Aktivkohlefilterbett abgeschieden. Zur Abscheidung des radioaktiven Methyljodids durch Isotopentausch oder Salzbildung kann imprägnierte Aktivkohle eingesetzt werden. Dem Aktivkohlebett ist vorteilhafterweise zur Rückhaltung von Abrieb ein Partikelfilter nachgeschaltet.

Die so gefilterte Luft wird dann in einem zweiten Prozessschritt einem Edelgasmodul zugeführt. Das Edelgasmodul beinhaltet im Wesentlichen zwei Adsorberkolonnen in Zwillingskonfiguration, die mit Adsorbens/Adsorbensien, vorzugsweise Aktivkohle, gefüllt sind. Das Adsorbens der Kolonnen kann auch aus mehreren Schichten von Aktivkohle und/oder Zeolith und/oder Molekularsieben aufgebaut sein.

Die Zuluft tritt in die erste Adsorberkolonne ein, wobei die Edelgase wie z. B. Xenon, Krypton durch eine dynamische Adsorption bei ihrem Durchlauf durch die Kolonne verzögert werden. Nach der Kolonne ist zweckmäßigerweise ein Filter zur Rückhaltung von Adsorberpartikeln angeordnet.

Die Abluft aus dem zu versorgenden Raumbereich wird gleichzeitig über die zweite Adsorberkolonne geführt und bewirkt dort eine Rückspülung der zuvor akkumulierten Edelgasaktivität, so dass diese Kolonne wieder zur Beladung nach der Umschaltung bereit steht. Die Umschaltung wird spätestens kurz vor dem Durchbruch der Aktivität in der ersten Adsorberkolonne vorgenommen, wobei diese dann mit der Abluft rückgespült wird. Die Umschaltung wird vorzugsweise passiv durch ein Zeitglied oder eine Aktivitätsmessung ausgelöst.

Die Rückspülung wird vorteilhafterweise durch ein Gebläse in der Abluftleitung unterstützt, wobei die Volumenvergrößerung des Abluftstroms durch den Unterdruck den Rückspülprozess der Edelgase verstärkt.

In der Abluftleitung der Warte befindet sich vorteilhafterweise eine Drossel, die zur passiven Überhitzung der Abluft und damit zu einer Verringerung der in der Abluft befindlichen Feuchtigkeit führt (Expansionstrocknung). Dadurch wird die Desorptionsgeschwindigkeit der Edelgase in der nachgeschalteten, zu spülenden Adsorberkolonne begünstigt.

In der Zuluftleitung zum Edelgasmodul befinden sich vorteilhafterweise eine Drossel und/oder ein Lufttrockner, um zu verhindern, dass zu hohe Feuchtigkeit auf die Edelgaskolonnen gefördert wird.

Das Edelgasmodul kann zusätzlich mit einem passiven Kühlspeicher zur Erhöhung der k-Werte ausgerüstet werden. Der k-Wert beschreibt in diesem Zusammenhang die Adsorptionskapazität des Adsorbermaterials für Edelgas in z. B. der Einheit cm³ Edelgas / g Adsorbens. Der k-Wert ist abhängig von der Temperatur, dem Druck und Feuchtegehalt des Gases. Er wird in der Regel empirisch ermittelt.

Die Adsorberkolonnen werden bevorzugt im Druckwechselverfahren betrieben, d. h. Unterdruck der zu spülenden Kolonne und Überdruck der zu beladenden Kolonne (jeweils in Relation zum Atmosphärendruck), um die k-Werte der Kolonnen zu verbessern und deren Abmessungen zu reduzieren. Der Überdruck in der von der Zuluft durchströmten Adsorberkolonne wird beispielsweise mit einem Einstellventil in der Zuluftleitung reguliert.

Die Abluft wird zusammen mit den rückgespülten Edelgasen in die Kraftwerksumgebung mit genügend Abstand zu der Zuluftansaugung abgegeben.

Das Belüftungssystem umfasst zweckmäßigerweise eine Steuerung und entsprechende Einstellorgane für Durchfluss und Drücke.

Die mit der Erfindung erzielten Vorteile bestehen insbesondere darin, dass neben den luftgetragenen Aktivitäten in Form von Aerosolen und Jod / Jodverbindungen (insbesondere Organojod) zugleich die radioaktiven Edelgase von der Zuluft der Warte zurückgehalten werden. Mit dem Druckwechsel- und Spülverfahren der Zwillingskolonnen können selbst langlebige Edelgasisotope wie Krypton-85 zuverlässig aus dem Zuluftstrom abgeschieden werden. Die zur Entfernung der Edelgase von dem Sorbens / Adsorbens benötigten Bedingungen werden passiv durch Expansionsüberhitzung unterstützt. Bedarf an elektrischem Betriebsstrom besteht im Wesentlichen nur für die Gebläse in der Zuluft- und der Abluftleitung sowie in geringem Umfang für die zugeordnete Steuereinheit und für die Umschaltmittel zur Umschaltung zwischen den Betriebszyklen. Dieser Bedarf kann problemlos mit einem autarken Energieversorgungsmodul (z. B. durch Batterien und/oder ein Dieselaggregat) für mindestens 72 h gedeckt werden.

Zusammengefasst werden zur Sicherstellung der Begehbarkeit der Warte folgende Funktionen gewährleistet:
- Isolation der Wartenlüftung von den restlichen Gebäudeteilen
- Überdruck gegenüber den angrenzenden Gebäuderäumen (z. B. < 1 mbar)
- Einhaltung der zulässigen Kohlenmonoxid- und Kohlendioxid-Konzentration
- Jodrückhaltung
- Aersolrückhaltung
- Rückhaltung der Edelgase (z. B. Kr, Xe)
- Begrenzung der Dosis (z. B. < 100 mSv/7d)
- Temperaturbegrenzung zur Einhaltung der l&C Temperatur-Qualifikationen
- Sicherstellung der oben genannten Funktionen für mindestens 72 h

Weitere Vorteile sind in stichpunktartiger Zusammenfassung:
- modularer und mobiler Systemaufbau
- geringer Aufwand und hohe Flexibilität bei Integration in laufende Anlagen
- geringer Wartungsaufwand
- eine aufwendige Lagerhaltung von atemfähiger Luft entfällt
- Abdeckung größerer Luftmengen (Luftwechsel) und Raumbereiche möglich

Ein Ausführungsbeispiel der Erfindung wird nachfolgend anhand von Zeichnungen näher erläutert.

FIG. 1 gibt nach Art eines Blockfließbildes einen schematischen und stark vereinfachten Überblick über ein Belüftungssystem für einen Leitstand eines Kernkraftwerkes.

FIG. 2 zeigt eine Abwandlung (Erweiterung) des in FIG. 1 dargestellten Systems.

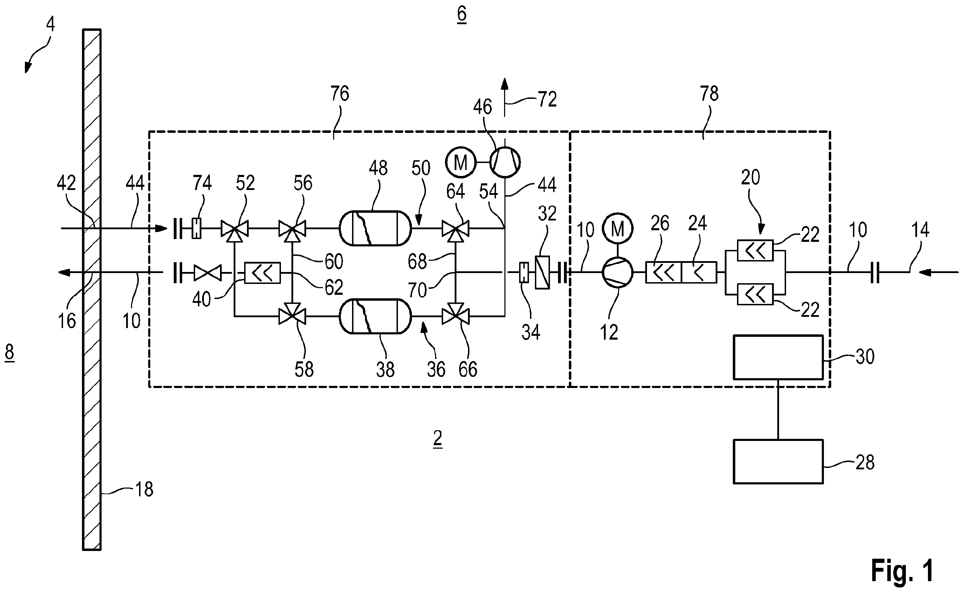

Das in FIG. 1 dargestellte Störfall-Belüftungssystem, kurz Belüftungssystem 2 dient der Frischluftzufuhr eines auch als Leitwarte oder im Englischen als Main Control Room (MCR) bezeichneten Leitstandes 4 eines Kernkraftwerkes 6 in Unfall- oder Störfallsituationen, insbesondere in der Anfangsphase eines schweren Störfalles mit Freisetzung von nuklearen Spaltprodukten innerhalb des Kraftwerksgebäudes und gegebenenfalls auch in der Umgebung.

In derartigen Szenarien, die üblicherweise mit dem Ausfall der Eigenstromversorgung des Kernkraftwerkes 6 und damit auch mit dem Ausfall des normalbetrieblichen Belüftungssystems (nicht dargestellt) für den Leitstand 4 einhergehen, kommt es in besonderem Maße darauf an, den Leitstand 4 noch für eine gewisse Zeitspanne - etwa bis zu 72 h nach dem Einsetzen des Störfalls - ohne Gefährdung des Bedienpersonals besetzt halten zu können, um anfängliche Gegenmaßnahmen einzuleiten und zu überwachen. Möglicherweise muss das Bedienpersonal auch so lange in dem Leitstand 4 verharren, bis nach dem Abklingen eines anfänglichen Aktivitätsmaximums in der Umgebung eine sichere Evakuierung möglich ist.

Zu diesem Zweck ist das Belüftungssystem 2 für den Leitstand 4 einerseits für eine Zufuhr von dekontaminierter und sauerstoffreicher Frischluft - auch Zuluft genannt - aus der Umgebung des Leitstandes 4 oder des Kraftwerksgebäudes ausgelegt und mit entsprechenden Filter- und Reinigungsstufen ausgestattet. Andererseits bewirkt das Belüftungssystem 2 einen Abtransport von verbrauchter und kohlendioxidreicher Luft - auch Abluft genannt - aus dem Leitstand 4 in die Umgebung. Im Gegensatz zu anderen, bislang gebräuchlichen Konzepten ist dabei weder eine Frischluftzufuhr aus einem zugehörigen Druckluftspeichersystem noch eine nennenswerte Rezirkulation und Wiederaufbereitung der Luft im Innenraum des Leitstandes 4 vorgesehen.

Konkret ist an den zumindest näherungsweise hermetisch gegenüber der äußeren Umgebung gekapselten Innenraum 8 des Leitstandes 4 eine auch als Frischluftzufuhrleitung oder kurz Frischluftleitung bezeichnete Zuluftleitung 10 angeschlossen, über die während des Betriebes des Belüftungssystems 2 mit Hilfe eines Gebläses 12 Frischluft aus der Umgebung angesaugt und in den Innenraum 8 gefördert wird. Der Ansaugeinlass oder kurz Einlass 14 der Zuluftleitung 10 kann in einiger Entfernung zum Leitstand 4 liegen, insbesondere außerhalb des Kraftwerksgebäudes. Je nach Störfallverlauf kann die über den Einlass 14 angesaugte Frischluft dennoch erheblich mit radioaktiven Spaltprodukten, insbesondere in Gestalt von Aerosolen, Jod und Jodverbindungen sowie Edelgassen belastet sein. Diese Bestandteile sollten möglichst vollständig und zuverlässig aus dem Frischluftstrom - auch Zuluftstrom genannt - entfernt werden, bevor dieser durch eine Durchführung 16 in der Umfassungswand 18 (nur ausschnittsweise dargestellt) hindurch in den Innenraum 8 des Leitstandes 4 eingeleitet wird.

Hierzu ist in Richtung des Frischluftstroms gesehen stromabwärts des Einlasses 14 eine erste Filterstufe in Gestalt eines Aerosolfilters 20 in die Zuluftleitung 10 geschaltet, hier im Beispiel realisiert durch zwei strömungsmäßig parallel geschaltete HEPA-Filter 22 (HEPA = High Efficiency Particulate Airfilter, zu Deutsch sinngemäß Schwebstofffilter). Die HEPA-Filter 22 bewirken demnach eine hocheffiziente Abscheidung der auch als Schwebeteilchen bezeichneten Aerosolpartikel aus dem Frischluftstrom, insbesondere in Bezug auf die Isotope Te, Cs, Ba, Ru, Ce, La.

Weiter stromabwärts ist eine zweite Filterstufe mit einem Jodfilter 24 und einem nachgeschalteten Partikelfilter 26 in die Zuluftleitung 10 geschaltet. Der Jodfilter 24 ist bevorzugt in Gestalt eines Aktivkohlefilterbetts mit einer Schichtdicke von beispielsweise 0,1 bis 0,5 m verwirklicht. Nach der zuvor im Aerosolfilter 20 erfolgten Abscheidung der Schwebstoffe werden in dem Jodfilter 24 radioaktive Jodverbindungen und elementares Jod beispielsweise mit einem k-Wert > 8 bei Kontaktzeiten von 0,1 bis 0,5 s abgeschieden. Zur Abscheidung des radioaktiven Methyljodids durch Isotopentausch oder Salzbildung kann imprägnierte Aktivkohle (z. B. mit Kaliumjodid als Imprägnierungsmittel) eingesetzt werden. Der dem Jodfilter 24 nachgeschaltete Partikelfilter 26 ist zur Rückhaltung von Abrieb aus dem Aktivkohlebett vorgesehen.

Stromabwärts der zweiten Filterstufe ist ein Fördergebläse oder kurz Gebläse 12 zum Transport des Frischluftstroms in die Zuluftleitung 10 geschaltet. Das vorzugsweise elektrisch angetriebene Gebläse 12 besitzt eine Ansaugleistung im Bereich von beispielsweise 100 bis 6.000 m³/h.

Zur Bereitstellung des erforderlichen Betriebsstroms ist ein autarkes, von der normalbetrieblichen Eigenstromversorgung und vorzugsweise auch vom gewöhnlichen (anlagenweiten) Notstromnetz unabhängiges Stromversorgungsmodul 28 vorgesehen, etwa auf der Basis von elektrischen Batterien / Akkumulatoren und/oder eines Dieselaggregats. Das Stromversorgungsmodul 28 aktiviert sich im Anforderungsfall vorzugsweise eigenständig nach Art einer unterbrechungsfreien Stromversorgung oder wird alternativ über eine zugeordnete Steuereinheit 30 angesteuert.

Weiter stromabwärts ist optional ein auch als Kühlfalle bezeichneter Lufttrockner 32 in die Zuluftleitung 10 geschaltet, mit dem sich kondensierbare Bestandteile aus den Frischluftstrom abtrennen lassen. Es kann sich beispielsweise um eine passive Kühlfalle mit Silikagel und/oder Eis als Trocknungsmittel handeln. Dadurch wird der Feuchtigkeitsgehalt des in die nachgeschalteten Funktionseinheiten (siehe unten) strömenden Frischluftstroms reduziert. Demselben Zweck dient eine alternativ oder zusätzlich vorhandene, hier im Ausführungsbeispiel in Strömungsrichtung der Frischluft gesehen hinter dem Lufttrockner 32 angeordnete Drossel 34, welche nach dem Prinzip der Expansionstrocknung auf den Frischluftstrom einwirkt. Es kann sich dabei insbesondere um ein regelbares Drosselventil handeln.

Im Anschluss an die Filterung und Trocknung durchströmt der Frischluftstrom bei entsprechender Stellung zugehöriger Stellorgane (siehe unten) beispielsweise den Leitungsabschnitt 36, in den eine Edelgas-Adsorberkolonne oder kurz Adsorberkolonne 38 geschaltet ist. Dabei werden die im Frischluftstrom enthaltenen Edelgase, vor allem Xenon und Krypton, im Rahmen eines sich dynamisch einstellenden Gleichgewichts durch physikalische und/oder chemische Adsorption an das in der Adsorberkolonne 38 vorhandene Adsorbens gebunden und somit in dem Leitungsabschnitt 36 verzögert, solange die Adsorptionskapazität der Adsorberkolonne 38 noch nicht erschöpft ist. Als Adsorbens können insbesondere ein oder mehrere Schichten Aktivkohle und/oder Zeolith und/oder Molekularsiebe vorgesehen sein.

Der Adsorberkolonne 38 ist ein zum Leitstand 4 führender Leitungsabschnitt nachgeschaltet, in den ein Partikelfilter 40 zur Rückhaltung von abgelösten Adsorberpartikeln geschaltet ist.

Schließlich tritt der auf die beschriebene Weise dekontaminierte Frischluftstrom über die Durchführung 16 durch die Umfassungswand 18 des Leitstandes 4 in dessen Innenraum 8 ein, so dass diesem unverbrauchte, sauerstoffreiche Atemluft mit einem für das Betriebspersonal zulässigen Aktivitätsgrad zugeführt wird.

Vervollständigt wird der Luftaustausch durch die Abfuhr von verbrauchter, kohlendioxidreicher Atemluft aus dem Leitstand 4 über die mit dessen Innenraum 8 verbundene und durch die Durchführung 42 in der Umfassungswand 18 in die Umgebung geführte Abluftleitung 44, in die zur Unterstützung des Gastransports ein Gebläse 46 geschaltet ist. Dabei handelt es sich vorzugsweise um ein elektrisch angetriebenes Gebläse 46, das ebenso wie das Gebläse 12 über das Stromversorgungsmodul 28 mit elektrischem Strom versorgt wird.

Da das Adsorptionsvermögen der auf den Frischluftstrom einwirkenden Adsorberkolonne 38 bei praktikabler Baugröße üblicherweise schon nach relativ kurzer Betriebsdauer erschöpft ist, ist das Belüftungssystem 2 für eine Rückspülung der adsorbierten Edelgase in die Umgebung im laufenden Betrieb ausgelegt. Zu diesem Zweck sind zwei im Wesentlichen baugleiche Adsorberkolonnen 38 und 48 vorhanden, die über entsprechende Leitungsverzeigungen und -anschlüsse sowie Stellorgane, hier in Form von 3-Wege-Ventilen, derart mit Frischluft oder mit Abluft beaufschlagt werden, dass eine der beiden Adsorberkolonnen 38 und 48 wie bereits beschrieben im Adsorptionsbetrieb auf den Frischluftstrom einwirkt, während die andere zeitgleich im Desorptionsbetrieb bzw. Spülbetrieb durch den Abluftstrom rückgespült und somit für den nächsten Adsorptionszyklus bereit gemacht wird. Durch Umschalten der Stellorgane kann die Rolle der Adsorberkolonnen 38 und 48 vertauscht und somit in Bezug auf die jeweilige Kolonne zyklisch zwischen Adsorptionsbetrieb und Desorptionsbetrieb gewechselt werden.

Bei dem in der Figur dargestellten Ausführungsbeispiel ist diese Funktionalität dadurch realisiert, dass die eine Adsorberkolonne 38 in dem Leitungsabschnitt 36 angeordnet ist, und die andere Adsorberkolonne 48 in strömungsmäßiger Antiparallelschaltung in dem Leitungsabschnitt 50. Beide Leitungsabschnitte 36 und 50 vereinen sich auf der einen Seite in dem 3-Wege-Ventil 52 und auf der anderen Seite in der auf der Saugseite des Gebläses 46 angeordneten Vereinigung 54. Ferner ist auf der einen Seite zwischen dem 3-Wege-Ventil 52 und den beiden Adsorberkolonnen 38, 48 eine durch die beiden 3-Wege-Ventile 56 und 58 schaltbare Querverbindung 60 zwischen die beiden Leitungsabschnitte 36 und 50 geschaltet, die über einen T-Anschluss 62 mit dem zum Partikelfilter 40 führenden Abschnitt der Zuluftleitung 10 verbunden ist. Auf der anderen Seite ist in analoger Ausgestaltung zwischen den Adsorberkolonnen 38, 48 und der Vereinigung 54 eine durch die beiden 3-Wege-Ventile 64 und 66 schaltbare Querverbindung 68 geschaltet, die über einen T-Anschluss 70 mit dem von der Drossel 34 kommenden Abschnitt der Zuluftleitung 10 verbunden ist.

Bei entsprechend gewählten Ventilstellungen strömt wie bereits weiter oben beschrieben die von der Drossel 34 kommende Zuluft über den T-Anschluss 70, das 3-Wege-Ventil 66, die in der Figur untere Adsorberkolonne 38, das 3-Wege-Ventil 58 und den T-Anschluss 62 zum Partikelfilter 40 und von dort weiter zum Leitstand 4. In dem anderen Leitungsstrang strömt die vom Leitstand 4 kommende Abluft über das 3-Wege-Ventil 52, das 3-Wege-Ventil 56, die in der Figur obere Adsorberkolonne 48 und das 3-Wege-Ventil 64 zum Sauganschluss des Gebläses 46 und von dort weiter zum einem Abluftkamin oder zu einem sonstigen Auslass 72, der zweckmäßigerweise in einiger Entfernung zum Einlass 14 für Frischluft liegt.

Das heißt, die im vorherigen Zyklus in der Adsorberkolonne 48 durch Adsorption akkumulierten Edelgase werden in diesem Betriebsmodus durch die weitgehend edelgasfreie Abluft aus dem Innenraum 8 des Leitstandes 4 von dem Adsorbens desorbiert und mit dem Abluftstrom in die Umgebung zurückgespült. Die Rückspülung wird durch das stromabwärts der rückgespülten Adsorberkolonne 48 angeordnete Gebläse 46 unterstützt, wobei die Volumenvergrößerung des Abluftstroms durch den Unterdruck den Rückspülprozess der Edelgase verstärkt.

In der Abluftleitung 44 von der Warte befindet sich in Richtung des Abluftstroms gesehen stromaufwärts des 3-Wege-Ventils 52 und somit stromaufwärts der gerade im Spülbetrieb befindlichen Adsorberkolonne 48 eine Drossel 74, vorzugsweise in Gestalt eines einstellbaren Drosselventils, die zur passiven Überhitzung der Abluft und damit zu einer Verringerung der in der Abluft befindlichen Feuchtigkeit führt (Expansionstrocknung). Dadurch wird die Desorptionsgeschwindigkeit der Edelgase in der nachgeschalteten Adsorberkolonne 48 begünstigt.

Nach der Umschaltung vertauschen sich die Rollen der Adsorberkolonnen 38 und 48. Nun strömt die Frischluft von der Drossel 34 kommend über das 3-Wege-Ventil 64, die Adsorberkolonne 48 und das 3-Wege-Ventil 56 zum Partikelfilter 40 und von dort zum Leitstand 4. Die Abluft aus dem Leitstand 4 hingegen strömt von der Drossel 74 kommend über das 3-Wege-Ventil 52, das 3-Wege-Ventil 58, die Adsorberkolonne 38 und das 3-Wege-Ventil 66 zum Gebläse 46 und von dort zum Auslass 72. Die zuvor beladene Adsorberkolonne 38 wird nun durch die Abluft rückgespült, während die Adsorberkolonne 48 für eine Reinigung der Frischluft und dementsprechend für eine erneute Beladung zur Verfügung steht.

Zur Steuerung der Umschaltvorgänge mittels der 3-Wege-Ventile 52, 56, 58, 64, 66 ist eine Steuereinheit 30 vorgesehen, welche zweckmäßigerweise auch die beiden Gebläse 12 und 46 und gegebenenfalls weitere Stellorgane für Durchfluss und Drücke ansteuert. Für den Fachmann versteht sich, dass die Umschaltfunktionalität auch mittels anderer Leitungstopologien und Stellorgane in äquivalenter Weise realisiert werden kann.

Wie durch die gestrichelten Umrandungslinien angedeutet, ist das Belüftungssystem 2 vorzugsweise modular aus einem Edelgasmodul 76, einem Jod- und Aerosolmodul 78 und einem Stromversorgungsmodul 28 aufgebaut. Die Grenzen zwischen den Modulen können im Detail natürlich auch anders gewählt sein, und es kann weitere Module oder Submodule geben. Die einzelnen Module sind beispielsweise in Standardcontainern transportabel untergebracht, so dass ein einfacher Transport zum Einsatzort und dort ein einfacher Aufbau durch Verbindung der zugehörigen, standardisierten Leitungsanschlüsse erfolgen kann.

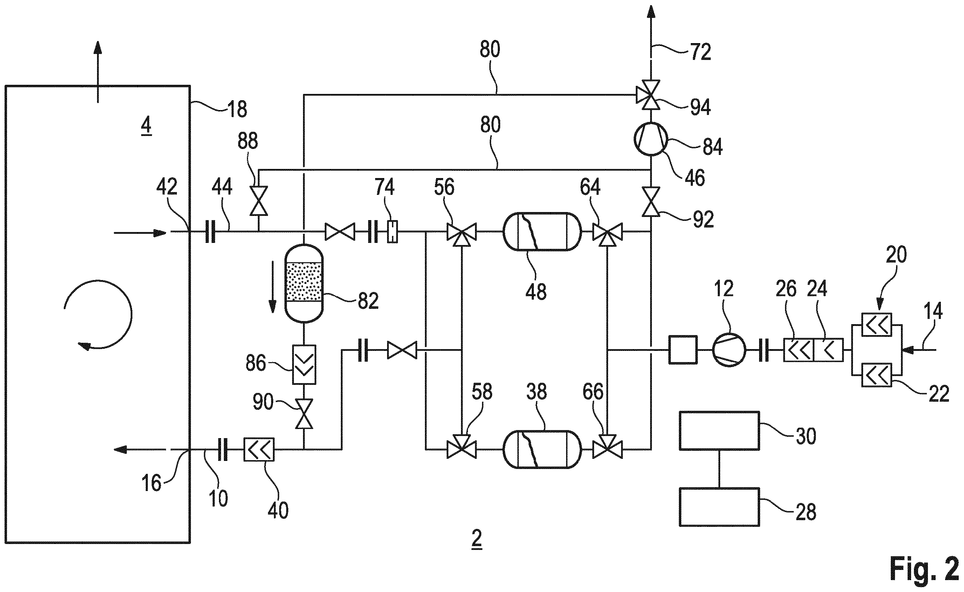

Bei der in FIG. 2 dargestellten Variante des Belüftungssystems 2 ist zusätzlich zu den aus FIG. 1 bekannten Komponenten eine Rückhalteeinheit für Kohlenstoffdioxid (CO₂), vorzugsweise mit einer überwiegend auf chemischer Adsorption (Chemiesorption) oder Absorption beruhenden CO₂-Adsorberkolonne 82 vorhanden. Damit ist es möglich, den Leitstand 4 für eine gewisse Zeitspanne im Umluftbetrieb ohne Zuspeisung von (gefilterter) Atemluft von außen zu betreiben, ohne dass die CO₂-Konzentration im Leitstand 4 einen für das Wohl des Betriebspersonals kritischen Wert überschreitet. Dies hat den Vorteil, dass bei extremen Aktivitätsbelastungen außerhalb des Containments im Umluftbetrieb keine Aktivität in den Leitstand 4 eindringen kann.

Die Einbindung der CO₂-Adsorberkolonne 82 in das aus FIG. 1 bekannte System erfolgt bevorzugt in der Weise, dass eine von der Abluftleitung 44 abzweigende und zur Zuluftleitung 10 führende Rezirkulationsleitung oder Umluftleitung 80 vorhanden ist, in die die CO₂-Adsorberkolonne 82 geschaltet ist. Ein in die Umluftleitung 80 geschaltetes Umluftgebläse 84 fördert somit im Umluftbetrieb die aus dem Leitstand 4 entnommene CO₂-reiche Abluft über die CO₂-Adsorberkolonne 82 mit vermindertem CO₂-Gehalt als Atemluft in den Leitstand 4 zurück. Die CO₂-Adsorption erfolgt nahezu bei dem Druck, der innerhalb des Leitstands 4 herrscht, also annähernd bei Atmosphärendruck oder geringfügig mehr (Vermeidung von in-leakage, siehe unten). Dadurch muss das Umluftgebläse 84 keine nennenswerte Kompressionsarbeit leisten.

Konkret ist die Umluftleitung 80 im dargestellten Beispiel einlassseitig über eine Leitungsverzweigung (z. B. ein T-Stück) an den zwischen der Durchführung 42 zum Leitstand 4 und der Drossel 74 liegenden Leitungsabschnitt der Abluftleitung 44 angeschlossen. Auslassseitig ist die Umluftleitung 80 über eine Leitungsverzweigung an den zwischen der Durchführung 16 und dem 3-Wege-Ventil 58 liegenden Leitungsabschnitt der Zuluftleitung 10 angeschlossen, hier speziell stromaufwärts des Partikelfilters 40. Zusätzlich oder alternativ können Filter 86 in die Umluftleitung 80 geschaltet sein, hier beispielsweise stromabwärts der CO₂-Adsoberkolonne 82 (die Strömungsrichtung im Umluftbetrieb ist durch einen Strömungspfeil neben der Kolonne angedeutet).

Bezüglich der Anbindung des Umluftsystems an das restliche Belüftungssystem 2 sind selbstverständlich Abwandlungen möglich, aber die dargestellte Variante besitzt insbesondere den Vorteil, dass insgesamt nur zwei Durchführungen 16, 42 durch die Umfassungswand 18 des Leitstandes 4 / durch das Containment benötigt werden. Weiterhin ist es von Vorteil, dass sich im Umluftbetrieb der die Edelgas-Adsorberkolonnen 38, 48 und die vorgelagerten Komponenten enthaltene Teil des Belüftungssystems 2 über entsprechende Absperrarmaturen oder Ventile einfach und zuverlässig von dem Umluftsystem strömungs- und medienmäßig abkoppeln bzw. isolieren lässt.

Die Umluftleitung 80 selber ist eingangsseitig und ausgangsseitig mit Absperrventilen 88, 90 versehen, um sie bedarfsweise vom restlichen Leitungssystem isolieren zu können. Vorzugsweise sind die Absperrventile 88, 90 hinsichtlich des Durchflusses regelbar (Regelventile), so dass auch Teilströme einstellbar sind. Dies gilt auch für die weiteren Ventile, insbesondere die weiter unten beschriebenen Absperrventile 92, 94.

Es ist möglich, ein eigenes, separates Umluftgebläse 84 für die Umluftleitung 80 vorzusehen. Besonders vorteilhaft ist es jedoch, das in der Variante nach FIG. 1 ausschließlich als Abluftgebläse zum Einsatz kommende Gebläse 46 in der Abluftleitung 44 im Sinne einer Doppelnutzung während des Umluftbetriebs als Umluftgebläse 84 zu verwenden. Zu diesem Zweck ist die Umluftleitung 80 über geeignete Leitungsverzweigungen oder Anschlüsse an einen das Gebläse 46 enthaltenden Leitungsabschnitt der Abluftleitung 44 angeschlossen. Dieser Leitungsabschnitt ist mittels Absperrventilen 92, 94 vom Auslass 72 und von dem die Edelgas-Adsorberkolonnen 38, 48 enthaltenen Teil des Belüftungssystems 2 isolierbar und bildet im Umluftbetrieb einen Teilabschnitt der Umluftleitung 80. Die CO₂-Adsorberkolonne 82 ist wie dargestellt vorzugsweise stromabwärts des Gebläses 46 (oder allgemeiner: des Umluftgebläses 84), auf dessen Druckseite, angeordnet.

Bevorzugt handelt es sich bei dem Absperrventil 94 um ein regelbares 3-Wege-Ventil an der Leitungsverzweigung, welches beim Desorptionsbetrieb (Rückspülung) der Edelgas-Adsorberkolonne 38 oder 48 den Auslass 72 freigibt und den angeschlossenen Strang der Umluftleitung 80 absperrt. Dadurch wird sichergestellt, dass die bei Desorption von der Edelgas-Adsorberkolonne 38 oder 48 gelösten Aktivitäten in die Umgebung ausgeblasen werden und nicht über die Umluftleitung 80 in den Leitstand 4 transportiert werden. Vorzugsweise werden also der Edelgas-Desorptionsbetrieb (Spülung der Edelgas-Adsorberkolonne 38 oder 48) und der CO₂-Adsorptionsbetrieb (Umluftbetrieb) nicht gleichzeitig gefahren.

Der Edelgas-Adsorptionsbetrieb (Beladung der Edelgas-Adsorberkolonne 38 oder 48) und der CO2-Adsorptionsbetrieb (Umluftbetrieb) können jedoch problemlos gleichzeitig gefahren werden. In diesem Fall wird über zumindest eine der beiden Edelgas-Adsorberkolonnen 38 oder 48 und die Zuluftleitung 10 gefilterte Frischluft in den Leitstand 4 eingeblasen. Die Abluft aus dem Leitstand 4 wird bei geöffnetem Absperrventil 88 mittels des Gebläses 46 durch die Umluftleitung 80 transportiert. Je nach Stellung des als 3-Wege-Regelventil ausgebildeten Absperrventils 94 wird dabei ein mehr oder minder großer Teilstrom (der ggf. auch den Wert Null besitzen kann) über den Auslass 72 in die Umgebungsatmosphäre entlassen und der restliche Teilstrom über die CO2-Adsorberkolonne 82 in den Leitstand 4 zurückgeführt. Das Absperrventil 92 ist dabei geschlossen, so dass wie weiter oben erwähnt die unerwünschte Rückführung von Aktivitäten aus den Edelgas-Adsorberkolonnen 38 oder 48 in den Leitstand 4 vermieden wird.

Eine weitere mögliche Betriebsweise beinhaltet den simultanen Adsorptions- und Desorptionsbetrieb der Edelgas-Adsorberkolonnen 38 oder 48 im wiederkehrenden Wechsel, wie bereits im Zusammenhang mit FIG. 1 beschrieben. In diesem Betriebsmodus findet wie oben erwähnt bevorzugt keine CO2-Adsorption im Umluftbetrieb statt.

Allerdings wurde festgestellt, dass die physikalische Adsorption in den Edelgas-Adsorberkolonnen 38 oder 48 bei höherem Druck (beispielsweise 8 bar) deutlich effektiver ist als bei Atmosphärendruck, während die Desorption bevorzugt bei relativ niedrigem Druck, insbesondere bei leichtem Unterdruck in Relation zum Atmosphärendruck, abläuft. Dadurch ist nach jedem Wechselvorgang (Umschalten) eine gewisse Zeitspanne von beispielsweise 10 bis 30 Minuten für die erforderliche Druckerhöhung mittels des als Kompressor wirksamen Gebläses 12 einzuplanen. In dieser Phase der Druckerhöhung, in der das Rückhaltevermögen der Edelgas-Adsorberkolonnen 38 oder 48 noch nicht vollständig ausgeprägt ist, erfolgt die Belüftung des Leitstandes 4 bevorzugt nur durch CO2-Adsorbtion im Umluftbetrieb. Dabei nimmt zwar der Sauerstoffgehalt der Luft im mit Betriebspersonal besetzten Leitstand 4 durch Verbrauch langsam ab, aber der CO2-Gehalt wird sicher unterhalb eines kritischen Wertes gehalten. Später, nach Erreichen des für eine effektive Edelgasrückhaltung erforderlichen Betriebsdrucks, wird vorzugsweise die gefilterte Luftzufuhr über die Edelgas-Adsorberkolonnen 38 oder 48 hinzugeschaltet (Simultanbetrieb von Edelgas-Adsorption und CO2-Adsoption wie weiter oben beschrieben). Dadurch wird der zuvor abgesunkene Sauerstoffgehalt der Luft im Leitstand 4 wieder aufgefrischt. Später können Regenerationsphasen (Desorption) bei abgeschalteter Umluft durchgeführt und die Adsorberkolonnen 38 und 40 vertauscht werden.

Eine bevorzugte Betriebsweise des Belüftungssystems 2 gemäß FIG. 2 beinhaltet mit anderen Worten, dass in der erforderlichen Zeitspanne zur Druckerhöhung in den Adsorberkolonnen 38, 48 der Leitstand 4 - bevorzugt ausschließlich - im Umluftbetrieb versorgt wird. Nach der Druckerhöhung wird bevorzugt während / zusammen mit der chemischen CO2-Adsorption Frischluft über die Edelgasverzögerungsstrecke mit den Adsorberkolonnen 38, 48 zugespeist. Der erhöhte Volumenstrom wird vorteilhaft zur Aufrechterhaltung der Sauerstoff-Konzentration und zur Druckerhöhung im Leitstand 4 genutzt. Hierdurch wird eine gerichtete Strömung mit Überdruck im Leitstand 4 gegenüber der äußeren Umgebung erzeugt, die das Eindringen von Aktivität von außen in den Leitstand 4 (engl. in-leakage) sicher verhindert. Einfache Systeme, die nur mit einer CO₂-Abscheidung arbeiten, können diese Aufgabe nicht ausreichend sicher gewährleisten.

Das zur CO2-Adsorption in der Adsorberkolonne 82 eingesetzte Adsorbens kann beispielsweise Atemkalk (engl. soda lime), Zeolith / Molekularsieb oder ein regenerierbares Adsorbens sein. Als weitere Beispiele möglicher Adsorbensien können vor allem Oxide, Peroxide, und Hyperoxide (z. B. Kaliumhyperoxid) eingesetzt werden. Regenerierbare Adsorbensien können aus Metalloxiden oder deren Gemischen bestehen. So reagiert z. B. Silberoxid mit CO₂ zu Silbercarbonat. Grundsätzlich können auch Gemische der genannten Adsorbensien zum Einsatz kommen oder mehrstufige Adsorberkolonnen mit gleichartigen oder unterschiedlichen Adsorbensien in den verschiedenen Stufen verwirklicht werden.

Bei entsprechender Eignung des Adsorbens kann die in der Adsorberkolonne 82 erfolgende Chemiesorbtion bei erhöhten Temperaturen reversibel geführt werden und das Adsorbens prinzipiell regeneriert werden. Hierzu sind gegebenenfalls einfache Modifikationen in der Leitungsführung des Umluftsystems zweckmäßig, um derartige Regenerationsphasen außerhalb des oben beschriebenen Umluftbetriebs ohne Belastung für den Leitstand 4 durchführen zu können.

Zusammengefasst gewährleisten die Systeme gemäß FIG. 1 und FIG. 2, dass neben der luftgetragenen Aktivität der Aerosole und Organojod auch die Edelgase von der Atemluft der Warte zurückgehalten werden. Bei dem erweiterten System gemäß FIG. 2 wird darüber hinaus das CO₂ aus der Atemluft durch chemische Adsorption / Absorption entfernt.

Durch die Einbindung der direkten CO2-Adsorption kann der Leitstand 4 in extremen Unfallsituationen im Umluftbetrieb gefahren werden, bis die Sauerstoffkonzentration der Wartenluft auf einen unteren Grenzwert (ca. 17-19 Vol.-%) absinkt, so dass eine Frischluftzufuhr von außen benötigt wird. Das Edelgasrückhaltemodul mit den Adsorberkolonnen 38, 48 wird dann vor allem zur Deckung und Anhebung des Sauerstoffgehaltes betrieben. Hierdurch kann die benötigte Kapazität des Modules hinsichtlich der Antriebsenergie und Aktivkohlemenge beträchtlich reduziert werden. Die benötigte Kompressionsenergie zur Erzeugung der Druckwechseladsorption kann minimiert werden. Hierdurch können die zur autarken Erzeugung der Energie benötigten Aggregate kleiner ausgeführt werden.

Auch wenn die Beschreibung bislang auf die Belüftung des (zentralen) Leitstandes eines Kernkraftwerkes ausgerichtet war, so ist doch klar, dass das Belüftungssystem 2 auch für die Störfall-Belüftung von anderen Raumbereichen innerhalb eines Kernkraftwerkes oder allgemeiner einer kerntechnischen Anlage - etwa auch Brennelementlager, Wiederaufbereitungsanlagen, brennstoffverarbeitende Anlagen etc. - verwendet werden kann, etwa von Hilfsanlagengebäuden, Schaltanlagenräumen, Messwarten oder anderen Bedien- und Überwachungsräumen. Für derartige Räume wird in zusammenfassender, schlagwortartiger Weise auch die Bezeichnung "Betriebsraum" verwendet.

**Bezugszeichenliste**

| | | | |
|---|---|---|---|
| 2 | Belüftungssystem | 64 | 3-Wege-Ventil |
| 4 | Leitstand | 66 | 3-Wege-Ventil |
| 6 | Kernkraftwerk | 68 | Querverbindung |
| 8 | Innenraum | 70 | T-Anschluss |
| 10 | Zuluftleitung | 72 | Auslass |
| 12 | Gebläse | 74 | Drossel |
| 14 | Einlass | 76 | Edelgasmodul |
| 16 | Durchführung | 78 | Jod- und Aerosolmodul |
| 18 | Umfassungswand | 80 | Umluftleitung |
| 20 | Aerosolfilter | 82 | CO₂-Adsoberkolonne |
| 22 | HEPA-Filter | 84 | Umluftgebläse |
| 24 | Jodfilter | 86 | Filter |
| 26 | Partikelfilter | 88 | Absperrventil |
| 28 | Stromversorgungsmodul | 90 | Absperrventil |
| 30 | Steuereinheit | 92 | Absperrventil |
| 32 | Lufttrockner | 94 | Absperrventil |
| 34 | Drossel | | |
| 36 | Leitungsabschnitt | | |
| 38 | Adsorberkolonne | | |
| 40 | Partikelfilter | | |
| 42 | Durchführung | | |
| 44 | Abluftleitung | | |
| 46 | Gebläse | | |
| 48 | Adsorberkolonne | | |
| 50 | Leitungsabschnitt | | |
| 52 | 3-Wege-Ventil | | |
| 54 | Vereinigung | | |
| 56 | 3-Wege-Ventil | | |
| 58 | 3-Wege-Ventil | | |
| 60 | Querverbindung | | |
| 62 | T-Anschluss | | |

## Patentansprüche

1. Belüftungssystem (2) für einen von Betriebspersonal begehbaren Betriebsraum in einer kerntechnischen Anlage, insbesondere einen Leitstand (4) in einem Kernkraftwerk (6), mit zumindest folgenden Komponenten:
• einer von einem externen Einlass (14) zu dem Betriebsraum führbaren Zuluftleitung (10), in die ein erstes Gebläse (12) und eine erste Edelgas-Adsorberkolonne (z. B. 38) geschaltet sind,
• einer von dem Betriebsraum zu einem externen Auslass (72) führbaren Abluftleitung (44), in die ein zweites Gebläse (46) und eine zweite Edelgas-Adsorberkolonne (z. B. 48) geschaltet sind, und
• Umschaltmitteln zur Vertauschung der Rollen von erster und zweiter Edelgas-Adsorberkolonne (38, 48),
**dadurch gekennzeichnet, dass**
eine Umluftleitung (80), in die eine CO2-Adsorberkolonne (82) und ein Umluftgebläse (84) geschaltet sind, vom Betriebsraum weg und wieder zurück führbar ist, wobei das zweite Gebläse (46) als Umluftgebläse (84) in die Umluftleitung (80) schaltbar ist.

2. Belüftungssystem (2) nach Anspruch 1, wobei die Umluftleitung (80) eingangsseitig an die Abluftleitung (44) und ausgangsseitig an die Zuluftleitung (10) angeschlossen ist.

3. Belüftungssystem (2) nach einem der Ansprüche 1 bis 2, wobei das erste Gebläse (12) in Strömungsrichtung der Zuluft gesehen stromaufwärts der ersten Edelgas-Adsorberkolonne (z. B. 38) angeordnet ist.

4. Belüftungssystem (2) nach Anspruch 3, wobei zwischen dem ersten Gebläse (12) und der ersten Edelgas-Adsorberkolonne (z. B. 38) eine Drossel (34) und/oder ein Lufttrockner (32) in die Zuluftleitung (10) geschaltet sind.

5. Belüftungssystem (2) nach einem der Ansprüche 1 bis 4, wobei das zweite Gebläse (46) in Strömungsrichtung der Abluft gesehen stromabwärts der zweiten Edelgas-Adsorberkolonne (z. B. 48) angeordnet ist.

6. Belüftungssystem (2) nach einem der Ansprüche 1 bis 5, wobei in Strömungsrichtung der Abluft gesehen stromaufwärts der zweiten Edelgas-Adsorberkolonne (z. B. 48) eine Drossel (74) in die Abluftleitung (44) geschaltet ist.

7. Belüftungssystem (2) nach einem der Ansprüche 1 bis 6, wobei ein Jodfilter (24) und ein Aerosolfilter (20) in die Zuluftleitung (10) geschaltet sind.

8. Belüftungssystem (2) nach Anspruch 7, wobei der Jodfilter (24) und der Aerosolfilter (20) in Strömungsrichtung der Zuluft gesehen stromaufwärts des ersten Gebläses (12) angeordnet sind.

9. Belüftungssystem (2) nach einem der Ansprüche 1 bis 8 mit einem autarken Stromversorgungsmodul (28).

10. Belüftungssystem (2) nach einem der Ansprüche 1 bis 9, wobei die Umschaltmittel mehrere 3-Wege-Ventile (52, 56, 58, 64, 66) umfassen.

11. Verfahren zum Betreiben eines Belüftungssystems (2) für einen von Betriebspersonal begehbaren Betriebsraum in einer kerntechnischen Anlage, insbesondere einen Leitstand (4) in einem Kernkraftwerk (6), mit zumindest folgenden Komponenten:
• einer von einem externen Einlass (14) zu dem Betriebsraum geführten Zuluftleitung (10), in die ein erstes Gebläse (12) und eine erste Edelgas-Adsorberkolonne (z. B. 38) geschaltet sind,
• einer von dem Betriebsraum zu einem externen Auslass (72) geführten Abluftleitung (44), in die ein zweites Gebläse (46) und eine zweite Edelgas-Adsorberkolonne (z. B. 48) geschaltet sind, und
• Umschaltmitteln zur Vertauschung der Rollen von erster und zweiter Edelgas-Adsorberkolonne (38, 48),
wobei simultan eine der besagten Edelgas-Adsorberkolonnen (z. B. 38) von Zuluft durchströmt und dadurch mit radioaktiven Edelgasen beladen wird und die andere Edelgas-Adsorberkolonne (z. B. 48) von Abluft durchströmt und dadurch rückgespült wird, und bei dem die Rollen der besagten Edelgas-Adsorberkolonnen (38, 48) durch Umschaltung vertauscht werden, sobald die Adsorptionskapazität der aktuell beladenen Edelgas-Adsorberkolonne (z. B. 38) erschöpft ist,
**dadurch gekennzeichnet, dass**
eine Umluftleitung (80), in die eine CO2-Adsorberkolonne (82) und ein Umluftgebläse (84) geschaltet sind, vom Betriebsraum weg und wieder zurück führt, wobei mittels des ersten Gebläses (12) zumindest in einer der besagten Edelgas-Adsorberkolonnen (38, 48) ein Druckaufbau durchgeführt wird, und wobei simultan im Umluftbetrieb ein CO2-Abbau durch die CO2-Adsorberkolonne (82) erfolgt.

12. Verfahren nach Anspruch 11, wobei die Belüftung des Betriebsraumes während des Druckaufbaus ausschließlich durch die CO2-bereinigte Umluft erfolgt.

13. Verfahren nach Anspruch 11 oder 12, wobei simultan dem Betriebsraum Zuluft über zumindest eine der besagten Edelgas-Adsorberkolonnen (38, 48) zugeführt wird und im Umluftbetrieb ein CO2-Abbau durch die CO2-Adsorberkolonne (82) vorgenommen wird.

14. Verfahren nach einem der Ansprüche 11 bis 13, wobei das erste Gebläse (12) als Umluftgebläse (84) verwendet wird.

## Claims

1. A ventilation system (2) of an operating room accessible to service personnel in a nuclear plant, in particular a control room (4) in a nuclear power plant (6), having at least the following components:
• air supply line (10) guidable from an external inlet (14) to the operating room, to which a first fan (12) and a first inert gas adsorber column (e.g. 38) are connected,
• an air discharge line (44) guidable from the operating room to an external outlet (72), to which a second fan (46) and a second inert gas adsorber column (e.g. 48) are connected, and
• switchover means for interchanging the roles of the first and second inert gas adsorber columns (38, 48),
**characterized in that**
an air circulation line (80), to which a CO₂ adsorber column (82) and an air circulation fan (84) are connected, can be guided away from the operating room and back again, wherein the second fan (46) can be connected as an air circulation fan (84) to the air circulation line (80).

2. The ventilation system (2) according to claim 1, wherein the air circulation line (80) is connected on the input side to the discharge line (44) and on the output side to the air supply line (10).

3. The ventilation system (2) according to any one of claims 1 to 2, wherein the first fan (12), when viewed in the flow direction of the supply air, is arranged upstream of the first inert gas adsorber column (e.g. 38).

4. The ventilation system (2) according to claim 3, wherein between the first fan (12) and the first inert gas adsorber column (e.g. 38) a throttle (34) and/or an air dryer (32) are connected to the air supply line (10).

5. The ventilation system (2) according to any one of claims 1 to 4, wherein the second fan (46), when viewed in the flow direction of the discharge air, is arranged downstream of the second inert gas adsorber column (e.g. 48).

6. The ventilation system (2) according to any one of claims 1 to 5, wherein, when viewed in the flow direction of the discharge air, a throttle (74) is connected to the air discharge line (44) upstream of the second inert gas adsorber column (e.g. 48).

7. The ventilation system (2) according to any one of claims 1 to 6, wherein an iodine filter (24) and an aerosol filter (20) are connected to the air supply line (10).

8. The ventilation system (2) according to claim 7, wherein the iodine filter (24) and the aerosol filter (20), when viewed in the flow direction of the supply air, are arranged upstream of the first fan (12).

9. The ventilation system (2) according to any one of claims 1 to 8 having a self-sufficient power supply module (28).

10. The ventilation system (2) according to any one of claims 1 to 9, wherein the switchover means comprise a plurality of 3-way valves (52, 56, 58, 64, 66).

11. A method for operating a ventilation system (2) of an operating room accessible to service personnel in a nuclear plant, in particular a control room (4) in a nuclear power plant (6), having at least the following components:
• air supply line (10) guided from an external inlet (14) to the operating room, to which a first fan (12) and a first inert gas adsorber column (e.g. 38) are connected,
• an air discharge line (44) guided from the operating room to an external outlet (72), to which a second flan (46) and a second inert gas adsorber column (e.g. 48) are connected, and
• switchover means for interchanging the roles of the first and second inert gas adsorber columns (38, 48),
wherein supply air simultaneously flows through one of said inert gas adsorber columns (e.g. 38) and is thus loaded with radioactive inert gases and discharge air flows through the other insert gas adsorber column (e.g. 48) and thus is backflushed, and in which the roles of said inert gas adsorber columns (38, 48) are interchanged by switching-over, as soon as the adsorption capacity of the currently loaded inert gas adsorber column (e.g. 38) is exhausted, **characterized in that**
an air circulation line (80), to which a CO₂ adsorber column (82) and an air circulation fan (84) are connected, leads away from the operating room and back again,
wherein by means of the first fan (12) a pressure buildup is carried out in one of said inert gas adsorber columns (38, 48), and wherein a CO₂ reduction is simultaneously carried out by the CO₂ adsorber column (82) in the air circulation mode.

12. The method according to claim 11, wherein the ventilation of the operating room is carried out during the pressure buildup exclusively by means of the CO₂-cleaned circulating air.

13. The method according to claim 11 or 12, wherein simultaneously supply air is supplied to the operating room via at least one of said inert gas adsorber columns (38, 48) and a CO₂ reduction is carried out by the CO₂ adsorber column (82) in the air circulation mode.

14. The method according to any one of claims 11 to 13, wherein the first fan (12) is used as air circulation fan (84).

## Revendications

1. Système de ventilation (2) d'un local technique accessible par le personnel d'exploitation, dans une installation nucléaire, plus particulièrement un poste de commande (4) dans une centrale nucléaire (6), avec au moins les composants suivants :
• une conduite d'arrivée d'air (10) pouvant être guidée d'une entrée externe (14) vers le local technique, dans laquelle sont branchés un premier ventilateur (12) et une première colonne d'adsorbeur de gaz nobles (par exemple 38),
• une conduite d'évacuation d'air (44) pouvant être guidée du local technique vers une sortie externe (72), dans laquelle sont branchés un deuxième ventilateur (46) et une deuxième colonne d'adsorbeur de gaz nobles (par exemple 48), et
• des moyens de commutation pour l'échange des rôles entre les première et deuxième colonnes d'adsorbeur de gaz nobles (38, 48),
**caractérisé en ce qu'**une conduite de circulation d'air (80), dans laquelle sont disposés une colonne d'adsorbeur de CO₂ (82) et un ventilateur de circulation d'air (84), peut être guidée à l'écart du local technique et y revenir, dans lequel le deuxième ventilateur (46) peut être branché en tant que ventilateur de circulation d'air (84) dans la conduite de circulation d'air (80).

2. Système de ventilation (2) selon la revendication 1, dans lequel la conduite de circulation d'air (80) est raccordée, côté entrée, à la conduite d'évacuation d'air (44) et côté sortie, à la conduite d'arrivée d'air (10).

3. Système de ventilation (2) selon l'une des revendications 1 à 2, dans lequel le premier ventilateur (12) est disposé, vu dans la direction d'écoulement de l'air entrant, en amont de la première colonne d'adsorbeur de gaz nobles (par exemple 38).

4. Système de ventilation (2) selon la revendication 3, dans lequel, entre le premier ventilateur (12) et la première colonne d'adsorbeur de gaz nobles (par exemple 38), un étrangleur (34) et/ou un dessiccateur d'air (32) sont branchés dans la conduite d'arrivée d'air (10).

5. Système de ventilation (2) selon l'une des revendications 1 à 4, dans lequel le deuxième ventilateur (46) est disposé, vu dans la direction d'écoulement de l'air sortant, en aval de la deuxième colonne d'adsorbeur de gaz nobles (par exemple 48).

6. Système de ventilation (2) selon l'une des revendications 1 à 5, dans lequel, vu dans la direction d'écoulement de l'air sortant, un étrangleur (74) est branché en amont de la deuxième colonne d'adsorbeur de gaz nobles (par exemple 48) dans la conduite d'évacuation d'air (44).

7. Système de ventilation (2) selon l'une des revendications 1 à 6, dans lequel un filtre à iode (24) et un filtre à aérosols (20) sont branchés dans la conduite d'arrivée d'air (10).

8. Système de ventilation (2) selon la revendication 7, dans lequel le filtre à iode (24) et le filtre à aérosols (20) sont disposés, vu dans la direction d'écoulement de l'air entrant, en amont du premier ventilateur (12).

9. Système de ventilation (2) selon l'une des revendications 1 à 8, avec un module d'alimentation en courant (28) autonome.

10. Système de ventilation (2) selon l'une des revendications 1 à 9, dans lequel les moyens de commutation comprennent plusieurs vannes à 3 voies (52, 56, 58, 64, 66).

11. Procédé de commande d'un système de ventilation (2) d'un local technique accessible au personnel d'exploitation dans une installation nucléaire, plus particulièrement un poste de commande (4) dans une centrale nucléaire (6), avec au moins les composants suivants :
• une conduite d'arrivée d'air (10) guidée d'une entrée externe (14) vers le local technique, dans laquelle sont branchés un premier ventilateur (12) et une première colonne d'adsorbeur de gaz nobles (par exemple 38),
• une conduite d'évacuation d'air (44) guidée du local technique vers une sortie externe (72), dans laquelle sont branchés un deuxième ventilateur (46) et une deuxième colonne d'adsorbeur de gaz nobles (par exemple 48), et
• des moyens de commutation pour l'échange des rôles entre les première et deuxième colonnes d'adsorbeur de gaz nobles (38, 48),
dans lequel, simultanément, une desdites colonnes d'adsorbeur de gaz nobles (par exemple 38) est traversée par l'air entrant et donc chargé en gaz nobles radioactifs et l'autre colonne d'adsorbeur de gaz nobles (par exemple 48) est traversé par l'air sortant et donc est rincée à contre-courant et dans lequel les rôles desdites colonnes d'adsorbeur de gaz nobles (38, 48) sont échangés par commutation dès que la capacité d'adsorption de la colonne d'adsorbeur de gaz nobles (par exemple 38) actuellement chargée est épuisée,
**caractérisé en ce que**
une conduite de circulation d'air (80), dans laquelle sont branchés une colonne d'adsorbeur de CO₂ (82) et un ventilateur de circulation d'air (84), s'éloigne du local technique et y revient, dans lequel au moyen du premier ventilateur (12), au moins dans une desdites colonnes d'adsorbeur de gaz nobles (38, 48), une montée en pression est effectuée et dans lequel, simultanément, dans le fonctionnement en circulation, une accumulation de CO₂ a lieu à l'aide de la colonne d'adsorbeur de CO₂ (82).

12. Procédé selon la revendication 11, dans lequel la ventilation du local technique a lieu pendant la montée en pression exclusivement par la circulation d'air nettoyée du CO₂.

13. Procédé selon la revendication 11 ou 12, dans lequel, simultanément, de l'air entrant est amené dans le local technique par l'intermédiaire d'au moins une desdites colonnes d'adsorbeur de gaz nobles (38, 48) et, dans le fonctionnement en circulation, une accumulation de CO₂ est effectuée par la colonne d'adsorbeur de CO₂ (82).

14. Procédé selon l'une des revendications 11 à 13, dans lequel le premier ventilateur (12) est utilisé en tant que ventilateur de circulation d'air (84).
